# EUROPEAN PATENT SPECIFICATION

(11) **EP 0 822 675 B1**
(45) Date of publication and mention of the grant of the patent: **26.02.2003**
(21) Application number: 97113237.8
(22) Date of filing: 31.07.1997
(51) Int. Cl.: H04B 10/18

(54) **Light transmission method and apparatus**
Lichtübertragungsverfahren und -einrichtung
Méthode et dispositif de transmission de lumière

(30) Priority: 01.08.1996 JP 20343796
(43) Date of publication of application: 04.02.1998
(73) Proprietor: NEC CORPORATION, Tokyo (JP)
(72) Inventor: Takehana, Tsukasa, Minato-ku, Tokyo (JP); Watanabe, Nobuta, Minato-ku, Tokyo (JP)
(74) Representative: Glawe, Delfs, Moll & Partner

(56) References cited:
- EP-A- 0 503 579
- US-A- 5 359 450

## Description

### Background of the Invention

The present invention relates to a light transmission method and apparatus and, more particularly, to a light transmission method and apparatus for transmitting a light output power large enough to attain a prominent nonlinear effect of an optical fiber.

In a long-distance light transmission scheme using an optical fiber amplifier, when a light output power to be input to an optical fiber serving as a line exceeds the level at which the nonlinear effect of the optical fiber becomes prominent, SBS (Stimulated Brillouin Scattering) occurs to scatter the input power of the optical fiber backward, degrading the transmission characteristics. For this reason, the input power must be limited to a predetermined level or lower.

SBS is a nonlinear optical effect that occurs in the optical fiber, and is known to occur when the input power to the fiber reaches a given threshold (Pth) or higher. Assuming that the Brillouin band is represented by ΔVb, and the line width of a light source is by ΔVs, the threshold Pth is proportional to (ΔVb + ΔVs)/ΔVb.

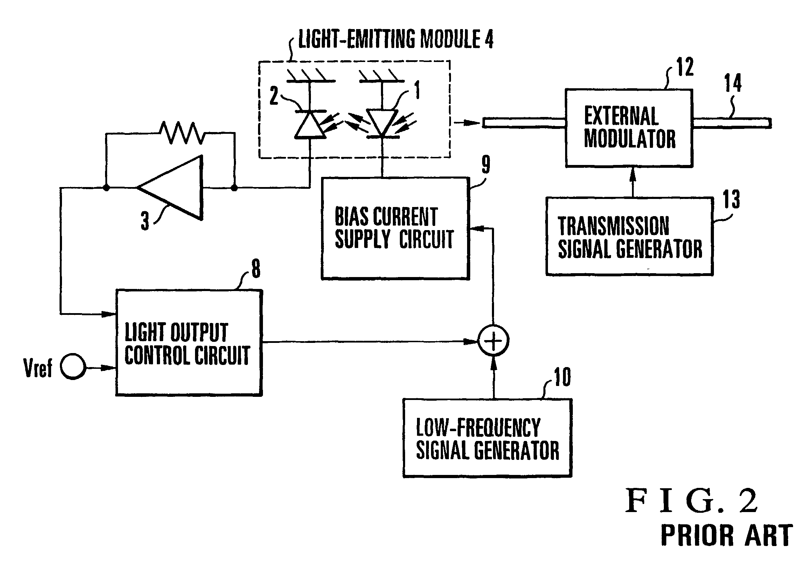

As a method of suppressing the above-described SBS, a method of superposing a small signal having a low frequency on the DC bias current of a light-emitting element like the one shown in Fig. 2 is known.

A conventional light transmission apparatus shown in Fig. 2 comprises a light-emitting module 4 constituted by a light-emitting element 1 and a light-receiving element 2 for monitoring back output light from the light-emitting element 1, and converting it into an electrical signal, a current-to-voltage conversion circuit 3 for converting a photocurrent detected by the light-receiving element 2 into a voltage signal, a light output control circuit 8 for comparing an output from the current-to-voltage conversion circuit 3 with a reference voltage Vref to control the light-emitting element 1, a bias current supply circuit 9 for supplying a bias current to the light-emitting element 1, and a low-frequency signal generator 10. A light output from the light-emitting element 1 is guided to an optical fiber 14, and subjected to light intensity modulation by an external modulator 12 on the basis of a signal from a transmission signal generator 13.

A signal having a low frequency (generally, a sine wave) which is generated by the low-frequency signal generator 10 is superposed on the bias current of the light-emitting element 1, and subjected to slight frequency modulation to widen the line width of light to be output from the light-emitting element 1. As described above, since the threshold at which SBS occurs is increased and improved by widening the line width, SBS can be suppressed.

In the above-described prior art, the low-frequency signal generator 10 is required to suppress SBS. Accordingly, the circuit becomes bulky, and the transmitter is difficult to be downsized and simplified.

In the prior art, a small-amplitude sine wave (normally set at several mA) is superposed as a modulation signal on the bias current of the light-emitting element 1. During frequency modulation, amplitude modulation (residual AM) is also undesirably performed. Particularly, the modulation amplitude becomes large depending on the difference in modulation efficiency caused by FM (Frequency Modulation) of the light-emitting element 1 to be applied. As a result, the residual AM component becomes large to generate a power penalty on the reception side. In an extreme case, no signal can be transmitted.

US-A-5,359,450 describes an optical transmission system for cancelling noise comprising a light source, an optical beam splitter, a detector, an inverter, a combiner and an external modulator. A portion of the light of the light source is directed by the beam splitter to the detector, wherein it is converted into an electrical noise signal. The electrical noise signal is inverted and coupled to the combiner, wherein the output of the combiner is provided as modulating signal input to the modulator.

### Summary of the Invention

It is an object of the present invention to provide a light transmission method and apparatus capable of suppressing the occurrence of SBS and downsizing the apparatus.

It is another object of the present invention to provide a light transmission method and apparatus capable of reducing the residual AM component in FM modulation.

In order to achieve the above objects, according to the present invention, there is provided a light transmission method comprising the steps of detecting an output from a light-emitting element by a light-receiving element, extracting a noise component having a predetermined frequency band from an output from a noise generation source for generating white noise, and supplying a bias current to the light-emitting element on the basis of the detected output from the light-receiving element and the extracted noise component and controlling the output from the light-emitting element to a predetermined level.

### Brief Description of the Drawings

Fig. 1 is a block diagram showing the arrangement of a light transmission apparatus according to an embodiment of the present invention; and
Fig. 2 is a block diagram showing the arrangement of a conventional light transmission apparatus.

### Description of the Preferred Embodiment

The present invention will be described in detail below with reference to the accompanying drawings.

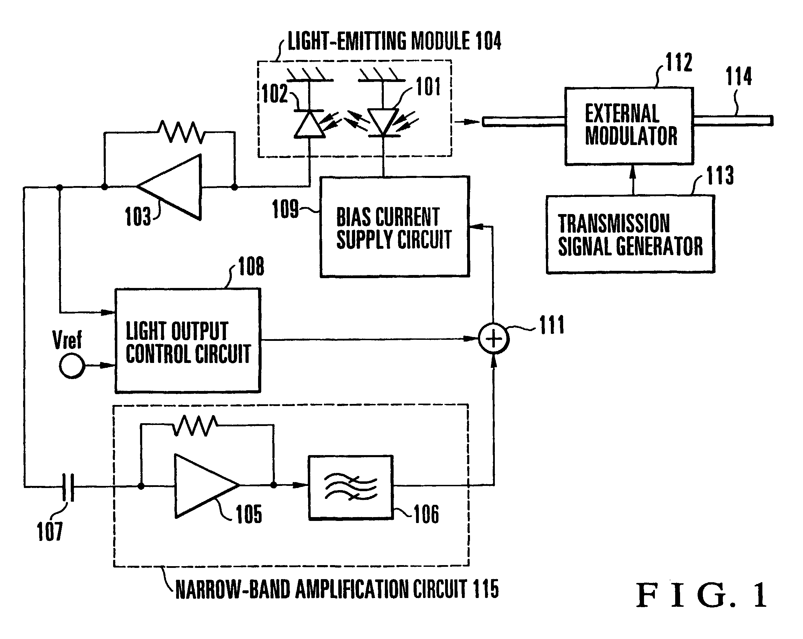

Fig. 1 shows a light transmission apparatus according to an embodiment of the present invention. In Fig. 1, a light transmission apparatus according to this embodiment comprises a light-emitting module 104 constituted by a light-emitting element 101 and a light-receiving element 102 for monitoring back output light from the light-emitting element 101, and converting it into an electrical signal, a current-to-voltage conversion circuit 103 for converting a photocurrent detected by the light-receiving element 102 into a voltage signal, a light output control circuit 108 for comparing an output from the current-to-voltage conversion circuit 103 with a reference voltage Vref to control an output from the light-emitting element 101 to a predetermined level, a bias current supply circuit 109 for supplying a bias current to the light-emitting element 101, a mixer 111 for mixing a control output from the light output control circuit 108 with a shot noise component, and outputting the mixed output to the bias current supply circuit, and a narrow-band amplification circuit 115 for extracting a shot noise component from the output from the current-to-voltage conversion element 103, and outputting it to the mixer 111. The narrow-band amplification circuit 115 is constituted by an amplifier 105 and a bandpass filter 106.

A light output from the light-emitting element 101 is guided to an optical fiber 114, and subjected to light intensity modulation by an external modulator 112 on the basis of a signal from a transmission signal generator 113. In this embodiment, since the transmission signal is superposed on a light signal (intensity modulation) by the external modulator 112, the light-emitting element 101 serving as a light source generally receives only a DC bias current, and the line width of its output light is very small (several MHz or less).

In Fig. 1, back output light from the light-emitting element 101 is photoelectrically converted by the light-receiving element 102 which constitutes the light-emitting module 104 together with the light-emitting element 101, and converted into a voltage signal by the current-to-voltage conversion element 103. An output from the current-to-voltage conversion element 103 is input to the light output control circuit 108 which is generally used in the conventional technique. The light output is controlled constant in accordance with the reference voltage Vref.

The output from the current-to-voltage conversion element 103 is also input to the narrow-band amplification circuit 115 via a capacitor 107. This output passes through the capacitor 107 so as to input an AC component of the output from the current-to-voltage conversion element 103 because the control of the light output control circuit 108 may be influenced if a DC component is input.

The output from the current-to-voltage conversion element 103 includes shot noise (a kind of white noise) generated in performing photoelectric conversion by the light-receiving element 102. The shot noise generated in performing photoelectric conversion uniformly distributes over a wide band. The narrow-band amplification circuit 115 amplifies the shot noise component output from the current-to-voltage conversion element 103 to a desired amplitude, and extracts only a desired band.

A signal extracted by the narrow-band amplification circuit 115 is mixed with an output from the light output control circuit 108 by the mixer 111, and then input as a control signal to the bias current supply circuit 109. In the bias current supply circuit 109, the shot noise component extracted by the narrow-band amplification circuit 115 is superposed on a DC bias current controlled by the light output control circuit 108 to serve as an FM modulation signal for widening the line width of the light source. In this embodiment, a shot noise component over the band range of 20 kHz to 300 kHz is extracted, and the extracted shot noise component is superposed as an FM modulation signal on the bias current of the light-emitting element 101 by mixer 111. With this processing, the line width (several MHz) free from any FM modulation signal can be widened 100 times or more (several hundred MHz).

As a result, even when a 1.55-µm zero-dispersion fiber is used as an optical fiber line, the SBS occurrent threshold can be increased to +15 dBm or more, which is higher by 10 dB or more than that in no modulation. Since the shot noise component distributing in a predetermined band is used as an FM modulation signal, the residual AM component can be suppressed, compared to a case wherein FM modulation is performed with a single-frequency sine wave.

In this embodiment, the band in which the FM modulation signal is extracted from the shot noise is set at 20 kHz to 300 kHz. The extraction band can be widened or narrowed depending on the occurrence threshold of SBS to be suppressed, and is not limited to the band in the above embodiment. The wavelength of output light from the light-emitting element 101 is not particularly limited to 1.55 µm.

This embodiment has exemplified the case wherein the light-emitting element 101 in the light transmission apparatus, and the external modulator 112 are constituted by separate devices. However, the same arrangement can also be applied when the light-emitting element 101 and the external modulator 112 are integrated into a semiconductor integrated external modulator.

In this embodiment, the shot noise in photoelectric conversion is used to simplify the arrangement. However, a noise source similar to the shot noise may be externally arranged, its band may be limited to a necessary one, similar to the above embodiment, and the noise may be superposed on the bias current of the light-emitting element 101. In this case, the residual AM component can be effectively reduced though the arrangement of the light transmission apparatus may be slightly complicated.

Although the narrow-band amplification circuit 115 of this embodiment is constituted by the amplifier 105 and the bandpass filter 106, it can be realized by the amplifier 105 having narrow-band gain characteristics itself.

Although, of an output from the current-to-voltage conversion element 103, an AC component is input to the narrow-band amplification circuit 115, a DC component can be used within such a range as not to influence the control of the light output control circuit 108.

According to the present invention, the narrow-band amplifier is added to the conventional light output control circuit. A predetermined frequency band of white noise such as shot noise can be extracted and superposed on a bias current to widen the line width of the light source. Therefore, SBS can be suppressed, and the residual AM component in FM modulation can be reduced.

## Claims

1. A light transmission method comprising the steps of:
detecting an output from a light-emitting element (101) by a light-receiving element (102); and **characterized by**
extracting a noise component having a predetermined frequency band from an output from a noise generation source for generating white noise; and
supplying a bias current to said light-emitting element on the basis of the detected output from said light-receiving element and the extracted noise component and controlling the output from the light-emitting element to a predetermined level.

2. A method according to claim 1, wherein the step of supplying the bias current comprises the steps of:
supplying the bias current to said light-emitting element on the basis of the output from said light-receiving element and controlling the output from said light-emitting element to the predetermined level; and
superposing the extracted noise component on the bias current of said light-emitting element.

3. A method according to claim 1, wherein the step of the supplying the bias current comprises the steps of:
generating a control signal in accordance with the output from said light-receiving element;
mixing the generated control signal with the extracted noise component; and
controlling the bias current to be supplied to said light-emitting element on the basis of the control signal mixed with the noise component.

4. A method according to claim 1, wherein said noise generation source is constituted by said light-receiving element for generating white noise in photoelectric conversion.

5. A method according to claim 4, wherein the step of extracting the noise component comprises the step of extracting an AC component of the white noise from a photoelectrically converted output from said light-receiving element.

6. A light transmission apparatus comprising:
a light-emitting module (104) including a light-emitting element (101) and a light-receiving element (102) for photoelectrically converting output light from said light-emitting element;
conversion means (103) for converting a photocurrent output from said light-receiving element into a voltage signal; and **characterized by**
level control means (108) for outputting a control signal for controlling an output from said light-emitting element to a predetermined level on the basis of an output from said conversion means;
noise generation means (102) for generating white noise;
noise extraction means (115) for extracting a noise component having a predetermined frequency band from an output from said noise generation means; and
bias current supply means (109) for supplying a bias current to said light-emitting element on the basis of the control signal from said level control means and the noise component output from said noise extraction means.

7. An apparatus according to claim 6, wherein said noise generation means is constituted by said light-receiving element for generating the white noise in photoelectric conversion, and
said noise extraction means extracts the noise component having the predetermined frequency band from the output from said conversion means.

8. An apparatus according to claim 7, wherein said level control means generates the control signal for controlling the output from said light-emitting element to the predetermined level on the basis of the output from said light-receiving element, and
said bias current supply means supplies the bias current to said light-receiving element on the basis of the control signal from said level control means and the noise component from said noise extraction means.

9. An apparatus according to claim 8, further comprising mixing means (111) for mixing the control signal from said level control means with the noise component from said noise extraction means to supply the control signal mixed with the noise component to said bias current supply means,
wherein said bias current supply means controls the bias current to be supplied to said light-emitting element on the basis of the control signal mixed with the noise component.

10. An apparatus according to claim 7, further comprising a capacitor (107) for extracting an AC component from the output from said conversion means, and outputting the AC component to said noise extraction means.

11. An apparatus according to claim 6, wherein said noise extraction means is constituted by a narrow-band amplification circuit having an amplifier and a bandpass filter.

12. An apparatus according to claim 6, further comprising:
transmission signal generation means (113) for generating a transmission signal; and
external modulation means (112) for performing light intensity modulation for a light output from said light-emitting element depending on the transmission signal from said transmission signal generation means.

## Patentansprüche

1. Lichtübertragungsverfahren mit den Schritten:
Erfassen einer Ausgabe von einem lichtemittierenden Element (101) durch ein lichtempfangendes Element (102) und **gekennzeichnet durch** Extrahieren einer Rauschkomponente mit einem vorgegebenen Frequenzband aus der Ausgabe einer Rauscherzeugungsquelle zur Erzeugung von weißem Rauschen und
Zuführen eines Vorspannstroms an das lichtemittierende Element auf Grundlage der detektierten Ausgabe von dem lichtempfangenden Element und der extrahierten Rauschkomponente und Steuern der Ausgabe des lichtemittierenden Elementes auf einen vorgegeben Pegel.

2. Verfahren nach Anspruch 1,
wobei der Schritt des Zuführens des Vorspannstroms die Schritte aufweist:
Zuführen des Vorspannstroms an das lichtemittierende Element auf Grundlage der Ausgabe des lichtempfangenden Elementes und Steuern der Ausgabe des lichtemittierenden Elementes auf den vorgegebenen Pegel und
Überlagern der extrahierten Rauschkomponente auf den Vorspannstrom des lichtemittierenden Elementes.

3. Verfahren nach Anspruch 1,
wobei der Schritt des Zuführens des Vorspannstroms die Schritte aufweist:
Erzeugen eines Steuersignals in Übereinstimmung mit der Ausgabe von dem lichtempfangenden Element,
Vermischen des erzeugten Steuersignals mit der extrahierten Rauschkomponente und
Steuern des Vorspannstroms, der dem lichtemittierenden Element zuzuführen ist, auf Grundlage des Steuersignals, das mit der Rauschkomponente gemischt ist.

4. Verfahren nach Anspruch 1,
wobei die Rauscherzeugungsquelle durch das lichtempfangende Element zur Erzeugung von weißem Rauschen bei fotoelektrischer Umwandlung gebildet ist.

5. Verfahren nach Anspruch 4,
wobei der Schritt des Extrahierens der Rauschkomponente den Schritt des Extrahierens einer Wechselstromkomponente für das weiße Rauschen von einer fotoelektrisch gewandelten Ausgabe von dem lichtempfangenden Element aufweist.

6. Lichtubertragungsgerät mit:
einem Lichtemissionsmodul (104) mit einem lichtemittierenden Element (101) und einem lichtempfangenden Element (102) zum fotoelektrischen Wandeln von Ausgabelicht des lichtemittierenden Elementes, Wandlermitteln (103) zum Wandeln einer Fotostromausgabe des lichtempfangenden Elementes in ein Spannungssignal,
**gekennzeichnet durch**
Steuermittel (108) zur Ausgabe eines Steuersignals zum Steuern einer Ausgabe des lichtemittierenden Elementes auf einen vorgegebenen Pegel auf Grundlage einer Ausgabe von den Wandlermitteln,
Rauscherzeugungsmittel (102) zum Erzeugen von weißem Rauschen;
Rauschextraktionsmittel (115) zum Extrahieren einer Rauschkomponente mit einem vorgegeben Frequenband aus einer Ausgabe von den Rauscherzeugungsmitteln und
Vorspannstrom-Zuführmittel (109) zum Zuführen eines Vorspannstroms an das lichtemittierende Element auf Grundlage des Steuersignals von den Pegelssteuermitteln und der Rauschkomponentenausgabe der Rauschextraktionsmittel.

7. Gerät nach Anspruch 6,
wobei das Rauscherzeugungsmittel durch das lichtempfangende Element gebildet ist zum Erzeugen von weißem Rauschen bei der fotoelektrischen Wandlung und
die Rauschextraktionsmittel die Rauschkomponente mit dem vorgegebenen Frequenzband aus der Ausgabe von den Wandlermitteln extrahieren.

8. Gerät nach Anspruch 7,
wobei die Pegelsteuermittel das Steuersignal zum Steuern der Ausgabe des lichtemittierenden Elementes auf den vorgegebenen Pegel auf Grundlage der Ausgabe von dem lichtempfangenden Element erzeugt und
die Vorspannstrom-Zuführmittel den Vorspannstrom an das lichtempfangende Element auf Grundlage des Steuersignals von den Pegelsteuermitteln und der Rauschkomponente von den Rauschextraktionsmitteln liefert.

9. Gerät nach Anspruch 8,
mit ferner Mischmitteln (111) zum Mischen des Steuersignals von den Pegelsteuermitteln mit der Rauschkomponente mit den Rauschextraktionsmitteln zur Zuführung des Steuersignals, das mit der Rauschkomponente vermischt ist, an die Vorspannstromzufuhrmittel, wobei die Vorspannstromzufuhrmittel den Vorspannstrom, der an das lichtemittierende Element zu liefern ist, auf Grundlage des Steuersignals steuert, das mit der Rauschkomponente vermischt ist.

10. Gerät nach Anspruch 7,
mit ferner einem Kondensator (107) zum Extrahieren einer Wechselstromkomponente aus der Ausgabe von den Wandlermitteln und zur Ausgabe der Wechselstromkomponente an die Rauschextraktionsmittel.

11. Gerät nach Anspruch 6,
wobei die Rauschextraktionsmittel durch eine Schmalbandverstärkerschaltung mit einem Verstärker und einem Bandpaßfilter gebildet sind.

12. Gerät nach Anspruch 6,
mit ferner Transmissionssignal-Erzeugungsmitteln (113) zum Erzeugen eines Übertragungssignals und
externen Modulationsmitteln (112) zur Durchführung einer Lichtintensitätsmodulation für eine Lichtausgabe von dem lichtemittierenden Element abhängig von dem Übertragungssignal von den Übertragungssignal-Erzeugungsmitteln.

## Revendications

1. Procédé de transmission de lumière comportant les étapes consistant à :
détecter une sortie provenant d'un élément d'émission de lumière (101) par un élément de réception de lumière (102), et **caractérisé par**
l'extraction d'une composante de bruit ayant une bande de fréquences prédéterminée à partir d'une sortie d'une source de génération de bruit pour générer un bruit blanc, et
l'alimentation d'un courant de polarisation dans ledit élément d'émission de lumière sur la base de la sortie détectée dudit élément de réception de lumière et de la composante de bruit extraite et la commande de la sortie de l'élément d'émission de lumière à un niveau prédéterminé.

2. Procédé selon la revendication 1, dans lequel l'étape d'alimentation du courant de polarisation comporte les étapes consistant à :
alimenter le courant de polarisation dans ledit élément d'émission de lumière sur la base de la sortie dudit élément de réception de lumière et commander la sortie dudit élément d'émission de lumière au niveau prédéterminé, et
superposer la composante de bruit extraite sur le courant de polarisation dudit élément d'émission de lumière.

3. Procédé selon la revendication 1, dans lequel l'étape d'alimentation du courant de polarisation comporte les étapes consistant à :
générer une signal de commande en fonction de la sortie dudit élément de réception de lumière,
mélanger le signal de commande généré avec la composante de bruit extraite, et
commander le courant de polarisation à alimenter dans ledit élément d'émission de lumière sur la base du signal de commande mélangé à la composante de bruit.

4. Procédé selon la revendication 1, dans lequel ladite source de génération de bruit est constituée dudit élément de réception de lumière pour générer un bruit blanc lors d'une conversion photoélectrique.

5. Procédé selon la revendication 4, dans lequel l'étape d'extraction de la composante de bruit comporte l'étape consistant à extraire la composante AC du bruit blanc depuis une sortie convertie de manière photoélectrique provenant dudit élément de réception de lumière.

6. Dispositif de transmission de lumière comportant :
un module d'émission de lumière (104) comportant un élément d'émission de lumière (101) et un élément de réception de lumière (102) pour convertir de manière photoélectrique une lumière de sortie provenant dudit élément d'émission de lumière,
des moyens de conversion (103) pour convertir une sortie de photocourant provenant dudit élément de réception de lumière en un signal de tension, et **caractérisé par**
des moyens de commande de niveau (108) pour émettre un signal de commande destiné à commander une sortie dudit élément d'émission de lumière à un niveau prédéterminé sur la base d'une sortie desdits moyens de conversion,
des moyens de génération de bruit (102) pour générer un bruit blanc,
des moyens d'extraction de bruit (115) pour extraire une composante de bruit ayant une bande de fréquences prédéterminée depuis une sortie desdits moyens de génération de bruit, et
des moyens d'alimentation de courant de polarisation (109) pour alimenter un courant de polarisation dans ledit élément d'émission de lumière sur la base du signal de commande provenant desdits moyens de commande de niveau et de la composante de bruit émise par lesdits moyens d'extraction de bruit.

7. Dispositif selon la revendication 6, dans lequel lesdits moyens de génération de bruit sont constitués dudit élément de réception de lumière pour générer le bruit blanc lors d'une conversion photoélectrique, et
lesdits moyens d'extraction de bruit extraient la composante de bruit ayant la bande de fréquences prédéterminée depuis la sortie desdits moyens de conversion.

8. Dispositif selon la revendication 7, dans lequel lesdits moyens de commande de niveau génèrent le signal de commande pour commander la sortie dudit élément d'émission de lumière au niveau prédéterminé sur la base de la sortie dudit élément de réception de lumière, et
lesdits moyens d'alimentation de courant de polarisation alimentent le courant de polarisation dans ledit élément de réception de lumière sur la base du signal de commande provenant desdits moyens de commande de niveau et de la composante de bruit provenant desdits moyens d'extraction de bruit.

9. Dispositif selon la revendication 8, comportant de plus des moyens de mélange (111) pour mélanger le signal de commande provenant desdits moyens de commande de niveau avec la composante de bruit provenant desdits moyens d'extraction de bruit pour alimenter le signal de commande mélangé à la composante de bruit dans lesdits moyens d'alimentation de courant de polarisation,
dans lequel lesdits moyens d'alimentation de courant de polarisation commandent le courant de polarisation à alimenter dans ledit élément d'émission de lumière sur la base du signal de commande mélangé à la composante de bruit.

10. Dispositif selon la revendication 7, comportant de plus un condensateur (107) pour extraire une composante AC depuis la sortie desdits moyens de conversion, et émettre la composante AC dans lesdits moyens d'extraction de bruit.

11. Dispositif selon la revendication 6, dans lequel lesdits moyens d'extraction de bruit sont constitués d'un circuit d'amplification à bande étroite ayant un amplificateur et un filtre passe-bande.

12. Dispositif selon la revendication 6, comportant de plus :
des moyens de génération de signal de transmission (113) pour générer un signal de transmission, et
des moyens de modulation externes (112) pour effectuer une modulation d'intensité de lumière sur une sortie de lumière dudit élément d'émission de lumière en fonction du signal de transmission provenant desdits moyens de génération de signal de transmission.
